Europäisches Patentamt

European Patent Office

Office européen des brevets

(11) Veröffentlichungsnummer: **0 049 835**
**B1**

(12) **EUROPÄISCHE PATENTSCHRIFT**

(45) Veröffentlichungstag der Patentschrift:
18.07.84

(51) Int. Cl.⁹: **B 01 D 9/00, B 29 B 3/00**

(21) Anmeldenummer: 81107853.4

(22) Anmeldetag: 02.10.81

(54) Verfahren und Vorrichtung zum Kristallisieren von Schmelzen mit gleichzeitiger Zerkleinerung.

(30) Priorität: 15.10.80 DE 3038973

(43) Veröffentlichungstag der Anmeldung:
21.04.82 Patentblatt 82/16

(45) Bekanntmachung des Hinweises auf die Patenterteilung:
18.07.84 Patentblatt 84/29

(84) Benannte Vertragsstaaten:
BE DE FR GB IT

(56) Entgegenhaltungen:
EP - A - 0 002 131
AU - B - 438 802
DE - C - 402 879
FR - A - 1 122 654
FR - A - 2 390 186

(73) Patentinhaber: BAYER AG, Konzernverwaltung RP
Patentabteilung, D-5090 Leverkusen 1 Bayerwerk (DE)

(72) Erfinder: Rathjen, Claus, Theodor-Heuss-Ring 78,
D-5090 Leverkusen 1 (DE)
Erfinder: Ullrich, Martin, Mendelssohnstrasse 32,
D-5090 Leverkusen 1 (DE)

BUNDESDRUCKEREI BERLIN

**Beschreibung**

Die Erfindung betrifft ein Verfahren zum Kristallisieren von Schmelzen chemischer Produkte in zweiwelligen kühlbaren Schneckenmaschinen mit gleichsinnig rotierenden Schneckenwellen. Ferner betrifft die Erfindung eine zur Durchführung des Verfahrens geeignete Ausführung einer Schneckenmaschine.

Kristallisierschnecken werden mit Erfolg, z. B. in der chemischen Industrie, eingesetzt, wenn heiße, z. B. stark dampfende oder schädliche, organische Schmelzen ohne jeden Kontakt mit der Atmosphäre in völlig geschlossener Apparatur in die abgekühlte, feste Phase überführt werden sollen. Weiterhin bewähren sich Kristallisierschnecken bei schwer kristallisierenden, zur Unterkühlung neigenden Schmelzen, da hier die Erstarrung nicht in völliger Ruhe sondern unter ständiger Bewegung und Scherung erfolgt und somit leichter eingeleitet und beschleunigt durchgeführt wird.

Schneckenmaschinen für solche Kristallisieraufgaben sind bekannt. Eingesetzt werden hierfür selbstreinigende, dicht kämmende Doppelschnecken mit gleichsinniger Rotation der beiden Schneckenwellen und gekühltem Gehäuse. Sie sind ausführlich beschrieben von H. Herrmann in »Schneckenmaschinen in der Verfahrenstechnik« (Springer-Verlag, 1972) [1].

Eine neuere Spezialentwicklung derartiger Schneckenmaschinen ist der zweiwellige, gleichläufige Schnecken-Wärmetauscher, ZDS-W der Fa. Werner und Pfleiderer, der in einem Firmenprospekt [2] 1979 bekannt gemacht wurde. Es bietet neben der Gehäusekühlung durch zusätzlich intensiv kühlbare, hohle Schneckenwellen für Kristallisierprozesse sehr große, ständig abgeschabte Kühlflächen an. Die kinematisch zwingende Selbstreinigung aller Kühlflächen verhindert, daß der produkterfüllbare Raum durch Erstarrung der Schmelze für den Stofftransport völlig blockiert wird. Es besteht eine ständige Zwangsförderwirkung der kämmenden Schneckenwellen.

Schneckenmaschinen benötigen für den Stofftransport und die inneren Schervorgänge eine Antriebsleistung, die im Falle der Doppelschnecken auch für die Abschabung der Schneckenoberflächen aufzubringen ist. Diese Antriebsleistung wird in Reibungswärme umgesetzt und führt zu einer Stofferwärmung. Beim Kristallisieren in Schneckenmaschinen muß nun zusätzlich zur Kristallisierwärme auch diese Reibungswärme über die Kühlfläche abgeführt werden, was die Energiebilanz des Gerätes zusätzlich belastet. Man bemüht sich daher, die an sich hier schädliche Reibungswärme durch eine scherungsarme Schneckengeometrie zu minimieren. Im Falle der unter [2] obengenannten Kristallisierschnecken geschieht dies durch ein konstant durchgehendes, scherungsarmes Schneckengewindeprofil (lediglich im offenen Ausfallschacht für das erstarrte Kristallisat am Maschinenende ist ein kurzes Gegengewinde zum Schutz der Wellenabdichtung vor Produktzutritt angeordnet). In der Schneckentechnik lt. [1] bekannte, intensive Misch- und Scherelemente wie z. B. Knetelemente kommen hier verständlicherweise nicht zum Einsatz.

Im praktischen Chemiebetrieb der beschriebenen Kristallisierschnecken zeigte es sich jedoch, daß durch hier spezielle, an sich ungewöhnliche Stoffbewegungen in der Maschine ihre Wirksamkeit stark eingeschränkt wird. Bei wirtschaftlichen Fahrzuständen, d. h. mittleren bis hohen Durchsätzen, bilden sich große, nicht vollständig durcherstarrte, C-förmige Produktteilchen, sogenannte »Hörnchen« die maximal einer Negativform des Schneckenkanals entsprechen (G. Matz, Chem. Ing. Tech. 52, (1980), S. 570—575). Diese Teilchen sind an ihrer Kontaktfläche mit den Kühlflächen der Schnecke voll erstarrt und bilden so eine stabile Kruste. Sie enthalten jedoch — im Inneren eingeschlossen — noch flüssige Schmelze oder plastischen Kristallbrei. Die Teilchen sind durch ihre umgebende Kruste so stabil, daß sie den vorhandenen Schneckenreib- und -druckkräften standhalten und wegen ihrer C-förmigen Negativgestalt des Schneckenkanals mit maximal möglicher Förderung eine Schnecke, nämlich mit der sogenannten Schraube-Mutter-Förderung, zu schnell durch die Maschine gefördert werden. Am Maschinenende werden die genannten C-förmigen Teilchen ausgestoßen, welche sich infolge der Nachkristallisation ihres plastischen Kerns erheblich nacherwärmen und damit in ruhender Schüttung starke Verklebungsneigung zeigen. Besonders ausgeprägt sind diese Erscheinungen bei schnell kristallisierenden Stoffen. Ein etwas anderer Fördermechanismus führt zu rundlichen Teilchen die — mit einem Maximaldurchmesser gleich Schneckengangtiefe — wie die Kugeln in einem Wälzlager im Schneckenkanal umlaufen, was bei der gleichsinnigen Doppelschnecke auch auf 8-förmigen Bahnen geschehen kann. Auch hier ergibt sich derselbe Effekt eines Schmelzeeinschlusses mit den oben beschriebenen negativen Folgen. Nur bei sehr geringen und damit unwirtschaftlichen Durchsätzen lassen sich in den beschriebenen Fällen die gewünschten Temperaturen und Eigenschaften des abgeworfenen Schüttgutes erreichen.

Aufgabe der vorliegenden Erfindung ist es, auf an sich für Kristallisierprozesse prädestinierten, in Gehäuse und Wellen intensiv kühlbaren Schneckenmaschinen

1. den Durchsatz erheblich zu steigern,
2. die Korngröße des abgeworfenen Schüttgutes bis auf einen Bruchteil der Schneckengangtiefe entscheidend zu verkleinern und
3. eine Nacherwärmung im abgeworfenen Schüttgut zu verhindern,
4. die Mittel, die zum Ziel führen, sollen der betroffenen Klasse von Leichtbauschnecken angemessen sein und nicht zu erheblichen Verteuerungen führen, wie z. B. in Richtung der lt. [1] auch bekannten schweren Schneckenmaschinen für die Kunststoffverarbeitung.

Diese Aufgabe wird erfindungsgemäß dadurch gelöst, daß das kristallisierende Material während der Erstarrung und der nachfolgenden Abkühlung in fester Phase unter Aufrechterhaltung der Hauptschneckenförderrichtung vielfach schneidend fortlaufend zerkleinert wird.

Aufgrund dieses Verfahrens ist eine erhebliche Steigerung des Durchsatzes möglich. Bei den bisher angewandten Kristallisationsverfahren lag unter Verwendung von Schneckenmaschinen demgegenüber bei vergleichbaren Durchsätzen die Produktaustrittstemperatur erheblich höher, so daß eine Produktverbackung befürchtet werden mußte. Ein weiterer Vorteil besteht darin, daß das abgeworfene Schüttgut erheblich feinkörniger ist. Die Korngröße beträgt nur noch einen Bruchteil der Schneckengangtiefe. Die eingangs erwähnten hörnchenförmigen Produktagglomerate, die ohne Scherbeanspruchung durch den Schneckenkanal transportiert werden, können mit dem erfindungsgemäßen Verfahren vollständig vermieden werden. Aus diesem Grunde findet auch keine Nachkristallisation und damit auch keine Nacherwärmung im abgeworfenen Schüttgut statt. Nach dem Stand der Technik wurden auf verschiedenen Schneckenmaschinen Nacherwärmungen von 20° bis 30°C gemessen. Diese Nacherwärmung führte zu erheblicher Verbackung des abgeworfenen Schüttgutes. Das nach dem erfindungsgemäßen Verfahren auskristallisierte Produkt ist dagegen sehr gut lager- und rieselfähig.

Die Vorrichtung zur Durchführung des erfindungsgemäßen Verfahrens geht aus von einer zweiwelligen Schneckenmaschine mit gleichsinnig rotierenden, selbstreinigenden, dicht kämmenden, hohlen und kühlbaren Schneckenwellen mit einem kühlbaren Gehäuse. Erfindungsgemäß wird nun die Schneckenmaschine in der Weise modifiziert, daß die Schneckenprofile mindestens auf einem Teil ihrer gesamten Länge vielfach von Nuten in regelmäßigen Abständen durchkreuzt werden, so daß von dem ursprünglich durchgehenden Gewindeprofil nur noch kleine Segmentstege stehenbleiben, deren Masse 30 bis 90%, bevorzugt 50 bis 70%, von der Masse des ursprünglichen Gewindeprofils beträgt.

Weiterentwicklungen und bevorzugte Ausführungsformen der Erfindung sind in den abhängigen Ansprüchen beschrieben.

Durch das Anbringen von Nuten im Schneckenprofil geht der bekannte Selbstreinigungseffekt einer zweiwelligen Schneckenmaschine zum Teil verloren. Es war daher zu befürchten, daß sich die genuteten Schneckenwellen durch Ablagerung von verkrustetem Produkt zusetzen würden. Gerade beim Ankristallisieren von Schmelze an gekühlten Metallflächen oder auch beim Zerbrechen großer Produktteilchen und beim Freisetzen innerer Schmelze bzw. von Kristallbrei wäre Produktansatz und damit eine teilweise Verstopfung, wenn nicht sogar eine Blockierung der Schneckenmaschine zu erwarten gewesen. Überraschenderweise treten diese Schwierigkeiten jedoch nicht auf.

Die Praxis zeigt weiterhin, daß beim Einsatz von Schneckenwellen mit genutetem Profil für Kristallisationsvorgänge trotz offensichtlich starker Stoffbeanspruchung keine wesentlich höheren Antriebskräfte erforderlich sind.

Weiterhin war es nicht vorhersehbar, daß die genutete Zone sich nicht nur am Austritt bewährt, sondern sich mit großem Vorteil über lange Bereiche der Schneckenwellen erstrecken darf.

Ein weiterer wesentlicher Vorteil liegt darin, daß zur Durchführung des erfindungsgemäßen Verfahrens handelsübliche Kristallisationsschneckenmaschinen benutzt werden können, deren Wellen in der oben beschriebenen Weise durch Anbringen von Nuten modifiziert werden. Diese Modifizierung ist fertigungstechnisch einfach auszuführen, so daß im Vergleich zum Maschinenwert keine wesentlichen Mehrkosten entstehen. Auch an bereits eingesetzten Kristallisierschnecken können diese Maßnahmen nachträglich ergriffen werden.

Im folgenden wird das erfindungsgemäße Verfahren und die dazugehörige Vorrichtung anhand von Zeichnungen näher erläutert. Es zeigt

Fig. 1 eine Längsansicht eines durchgehenden zweigängigen Gewindeprofils mit Rechtsdrall;

Fig. 2 den Querschnitt A-B der Schneckenwelle gemäß Fig. 1;

Fig. 3 zwei um 180° versetzte Nuten in einem Vollzylinder;

Fig. 4 einen Querschnitt C-D in Fig. 3;

Fig. 5 die Längsansicht eines durch Nuten unterbrochenen Gewindeprofils, das durch eine Überlagerung der Profile gemäß Fig. 1 und 3 entsteht;

Fig. 6 den Querschnitt E-F in Fig. 5 und

Fig. 7 die Produktaustrittstemperatur als Funktion des Durchsatzes für ein Produkt, das nach dem erfindungsgemäßen Verfahren kristallisiert wurde.

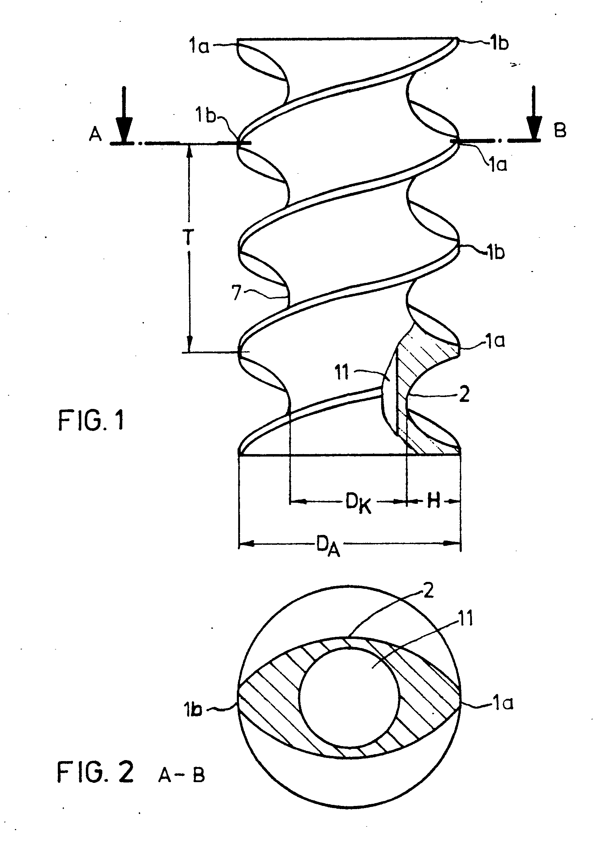

Die zweigängige, hohle Schneckenwelle gemäß Fig. 1 besteht aus den beiden gegenüberliegenden Gewindekämmen 1a und 1b mit dem Außendurchmesser $D_A$ und dem Schneckenkern 2 mit dem Kerndurchmesser $D_K$. Die Steigung des dadurch gebildeten Gewindeprofils ist mit T und die Gangtiefe mit H bezeichnet. In Fig. 2, die den Schnitt A-B zeigt, ist die Gangzahl an den zwei gegenüberliegenden Gewindekämmen 1a und 1b zu erkennen. Wie ersichtlich, handelt es sich um ein Gewindeprofil mit Rechtsdrall. Durch die Bohrung 11 fließt ein Kühlmedium.

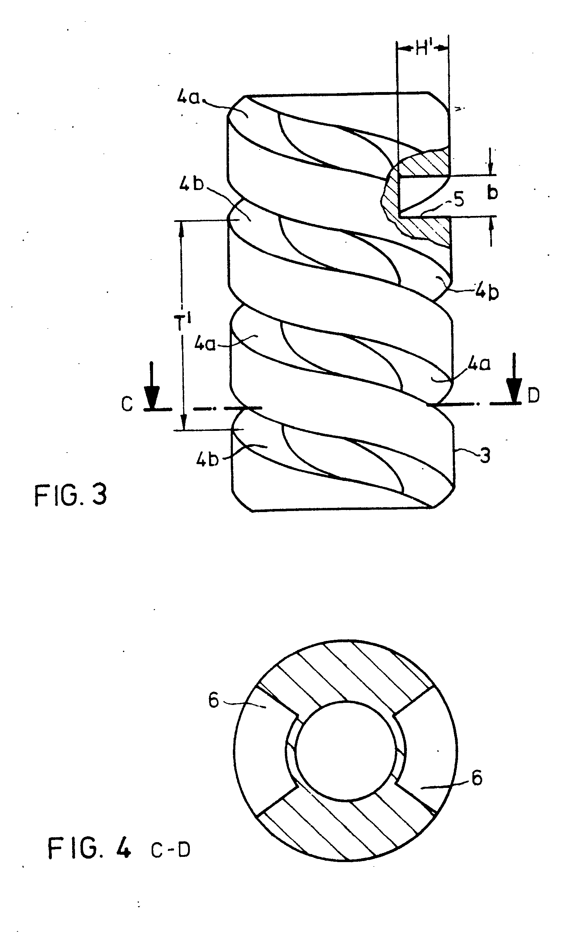

In Fig. 3 ist ein Vollzylinder 3 dargestellt, in den 2 um 180° versetzte Nuten 4a und 4b schraubenförmig mit Linksdrall eingedreht sind. Die Nuten 4a und 4b haben ein rechteckförmiges Profil (5), das im Querschnitt C-D als Kreisringsegment 6 erscheint. Die Steigung der Nuten 4a und 4b beträgt T', ihre breite b und ihre Nutentie-

fe H'.

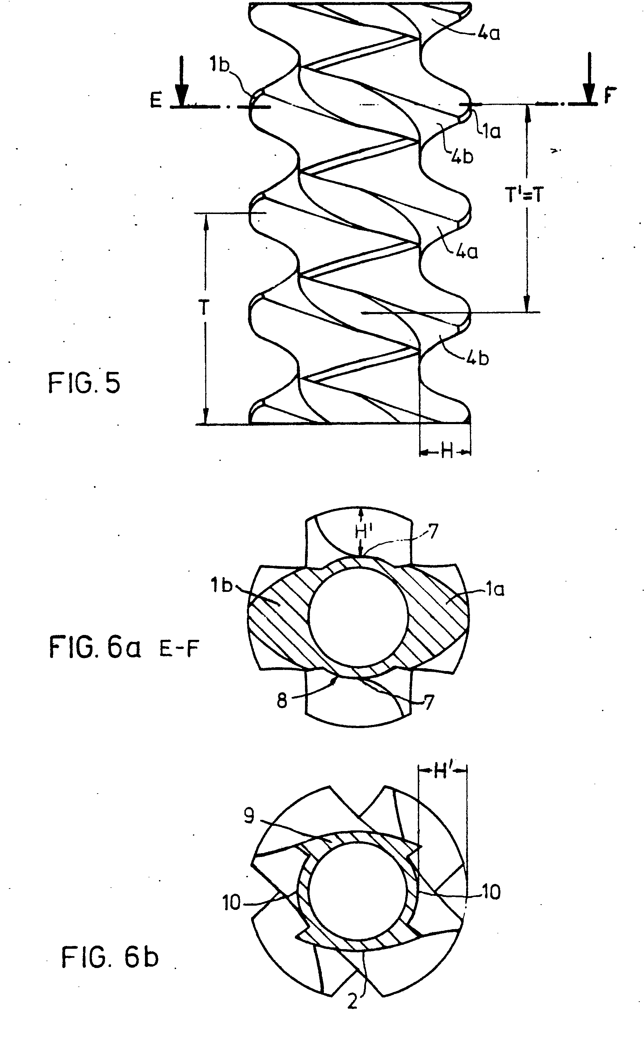

Die bisher beschriebenen Fig. 1 bis 4 dienen nur zur Erläuterung eines durch Nuten unterbrochenen Schneckenprofiles wie es in den Fig. 5 und 6 dargestellt ist. Dieses vielfach unterbrochene Schneckenprofil bildet die apparative Voraussetzung für die Durchführung des erfindungsgemäßen Verfahrens.

Das unterbrochene Schneckenprofil nach Fig. 5 bis 6 kann man sich durch Überlagerung der Fig. 1 und 3 entstanden denken. Zur Herstellung eines solchen Profils wird die Schneckenwelle gemäß Fig. 1 in eine Drehbank eingespannt und bei gleichmäßigem Vortrieb zuerst die eine Nut 4a und in einem weiteren Arbeitsgang die andere Nut 4b eingedreht. Vorzugsweise stimmt die Anzahl der Nuten (hier 2) mit der Gangzahl des hier zweigängigen Gewindeprofils überein. Ebenso stimmt die Nutentiefe H' hier mit der Gangtiefe H überein, so daß die Nuten 4a und 4b auf dem Schneckenkern bzw. Gewindegrund 7 enden (H' = H). Die schraubenförmig mit gleicher Steigung T' = T und mit entgegengesetztem Drall wie das Schneckenprofil 1a, b verlaufenden Nuten durchkreuzen das Schneckenprofil in regelmäßigen Abständen, so daß von dem ursprünglich durchgehenden Gewindeprofil nur noch kleine Segmentstege stehenbleiben. Diese Segmentstege werden gebildet durch je zwei spitzwinklig und zwei stumpfwinklig aufeinander zulaufende Begrenzungsflächen. Die in Drehrichtung vorn liegenden spitzwinkligen Begrenzungsflächen sind für die weiter unten beschriebene Zerkleinerungswirkung während der Kristallisation von Bedeutung. Die Breite der Nuten 4a und 4b wird so gewählt, daß beim Ausdrehen der Nut 30 bis 90%, vorzugsweise 50 bis 70%, der Masse des Gewindeprofils stehenbleibt. Dementsprechend geht zugunsten des Zerkleinerungseffektes die Förderwirkung der Schneckenwelle zurück.

Zur Durchführung des erfindungsgemäßen Verfahrens werden beide Wellen einer zweiwelligen, für Kristallisationszwecke geeigneten Schneckenmaschine entsprechend Fig. 5 modifiziert, d. h. mit Nuten versehen. Besonders bewährt hat sich eine Ausführungsform, bei der die beiden Wellen gemäß Fig. 5 und Fig. 6 entsprechend mit zwei gleichartigen um 180° versetzten Nuten (Nutenpaar 4a, 4b) versehen sind und das Nutenpaar 4a, 4b der ersten Welle zum Nutenpaar 4a, 4b der Nachbarwelle in der Schneckenmaschine derart um 90° phasenverschoben angeordnet ist, daß im Querschnitt gesehen das Nutenpaar der ersten Welle im Gewindegrund 7 (siehe Fig. 6a) beginnt, während das Nutenpaar 4a, 4b der Nachbarwelle am Gewindekamm 10 beginnt (siehe Fig. 6b). Zur Verdeutlichung sind in Fig. 6a und Fig. 6b die Schneckenwellen 8 und 9 nicht in Eingriffsposition, sondern in der Fertigungsposition dargestellt. Mit dieser Ausführung wird erreicht, daß die bei einer zweiwelligen Schneckenmaschine vorhandenen selbstreinigenden Eigenschaften trotz der vielfachen Unterbrechung der Gewindekämme soweit wie möglich erhalten bleiben. Die obenerwähnte Phasenverschiebung der Nuten bewirkt, daß die verbleibenden Segmente immer wieder miteinander in dicht kämmenden Eingriff gelangen.

Anstelle der schraubenförmigen Nuten 4a, 4b können auch achsenparallele Längsnuten eingefräst werden. In diesem Fall wird man über den Umfang verteilt eine größere Zahl von Nuten anbringen, um die gewünschte Vielfachunterbrechung des Gewindekammes zu erreichen.

Wie schon oben erwähnt, sind bevorzugt beide Wellen der für den Kristallisationsprozeß benutzten Schneckenmaschine in der oben angegebenen Weise modifiziert. Die Nutung erstreckt sich im allgemeinen über die gesamte Länge der Schneckenwellen. Vorzugsweise sind aber mindestens auf der stromabwärts gelegenen Maschinenhälfte Nutenzonen anzubringen. Alternativ zu einer durchgehenden Nutung können auch abwechselnd Zonen mit genuteten und ungenuteten, d. h. vollständigen Gewindekämmen, vorgesehen werden.

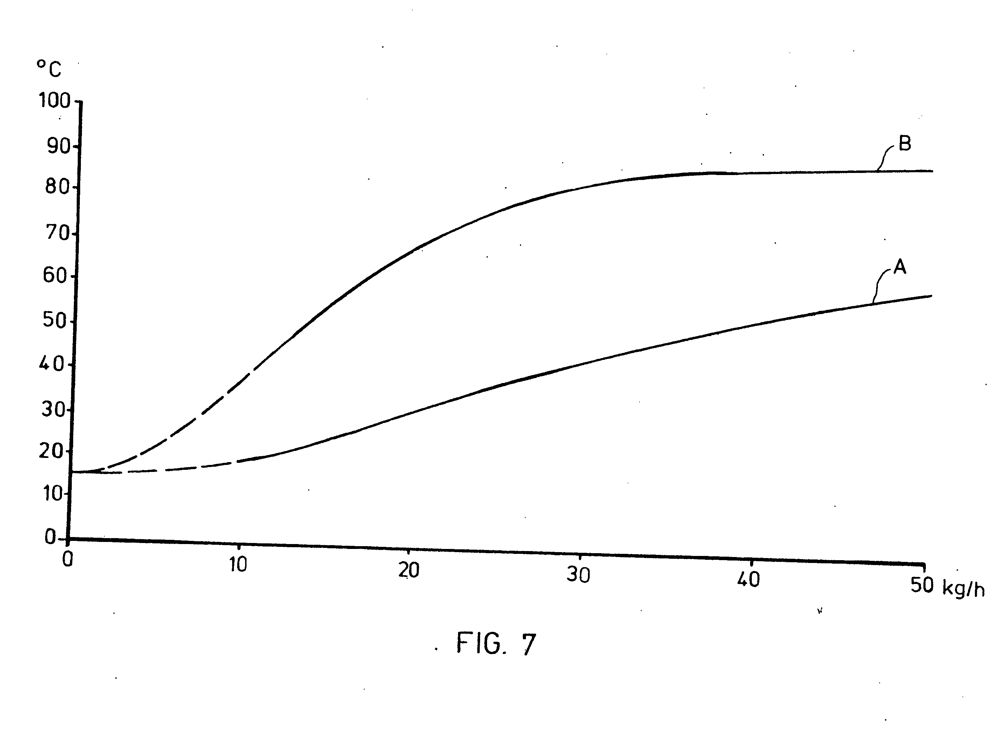

Mit Hilfe einer zweiwelligen kühlbaren Kristallisationsschneckenmaschine mit gleichsinnig rotierenden selbstreinigenden, in der obenangegebenen Weise modifizierten Schneckenwellen, wurde ein organisches Produkt mit einer Schmelztemperatur von 95° C aus der Schmelze durch Abkühlung auskristallisiert. Ein besonders wichtiger Parameter ist dabei die Temperatur des kristallisierten Produktes am Ausgang der Maschine. Die Produktaustrittstemperatur soll möglichst weit unterhalb der Schmelztemperatur liegen, um eine Nachkristallisation und ein Verbacken des auskristallisierten Produktes zu vermeiden. In Fig. 7 ist die Produktaustrittstemperatur als Funktion des Durchsatzes für das erfindungsgemäße Verfahren (Kurve A) und zum Vergleich dazu auch für eine Schneckenmaschine mit sonst gleichen Daten, aber durchgehendem Gewindeprofil entsprechend dem Stand der Technik (Kurve B) aufgetragen. Die Kristallisierschnecke hatte einschließlich der hohlen Schneckenwellen eine Wärmeaustauschfläche von insgesamt 0,43 m² bei einem Schneckenaußendurchmesser von 51 mm, einem Schneckenkerndurchmesser von 28 mm, einer Schneckensteigung von 48 mm und einer Schneckenlänge von 700 mm. Für das erfindungsgemäße Verfahren wurde die stromabwärts gelegene Hälfte beider Schneckenwellen in der oben beschriebenen Weise mit Nuten von 10 mm Nutbreite b in Rechteckform versehen. Die Kühlmitteltemperatur betrug 15° C. Man erkennt, daß bei dem erfindungsgemäßen Verfahren im Vergleich zum Stand der Technik die Produktaustrittstemperatur mit steigendem Durchsatz wesentlich schwächer ansteigt. Dadurch wird erst die Voraussetzung geschaffen, mit höheren Durchsätzen zu arbeiten. Aus dem Diagramm ist ersichtlich, daß der Durchsatz für eine vorgeschriebene Schüttguttemperatur z. B. von 60° C um den Faktor 3 von ca. 16 kg/h auf 48 kg/h gesteigert werden kann. Dieser wichtige Fortschritt beruht auf der Tatsache, daß das kristallisierende Material während der Erstarrung einer fortlaufenden Zerkleinerung unterworfen wird. Der Erstarrungsvorgang findet also unter starker mechanischer Beanspruchung des Materials statt. Eine Agglomeration zu größeren Produktklumpen wird von vornherein unterbunden.

Das abgeworfene Schüttgut ist bei dem erfindungsgemäßen Verfahren wesentlich feinkörniger, seine Korngröße von unter 2 mm beträgt nur noch einen Bruchteil der Schneckengangtiefe von 11,5 mm. Im Gegensatz dazu entstehen bei dem Verfahren nach dem Stand der Technik im Bereich höherer Durchsätze große Partikel mit 11 mm Dicke und 20 bis 30 mm Länge.

Bei dem erfindungsgemäßen Verfahren findet keine Nachkristallisation und damit auch keine Nacherwärmung im abgeworfenen Schüttgut statt. Nach dem Stand der Technik wurden auf verschiedenen Schneckenmaschinen Nacherwärmungen von 20° bis 30°C gemessen. Diese Nacherwärmung führte zu erheblicher Verbackung des abgeworfenen Schüttgutes.

Das erfindungsgemäße Verfahren bietet ein weites Anwendungsspektrum. Insbesondere können folgende Produkte nach diesem Verfahren kristallisiert werden:

Organische Zwischenprodukte, Salze, Farbstoffvorprodukte, Kautschukchemikalien, Kunststoffvorprodukte und -additive sowie Weichmacher, Pflanzenschutzmittel, pharmazeutische Vorprodukte und Polyurethanvorprodukte.

## Patentansprüche

1. Verfahren zum Kristallisieren von Schmelzen chemischer Produkte in zweiwelligen kühlbaren Schneckenmaschinen mit gleichsinnig rotierenden selbstreinigenden Schneckenwellen, dadurch gekennzeichnet, daß das kristallisierende Material während der Erstarrung und der nachfolgenden Abkühlung in fester Phase unter Aufrechterhaltung der Hauptschneckenförderrichtung vielfach schneidend fortlaufend zerkleinert wird.

2. Vorrichtung zur Durchführung des Verfahrens nach Anspruch 1, bestehend aus einer zweiwelligen Schneckenmaschine mit gleichsinnig rotierenden, selbstreinigenden dicht kämmenden hohlen und kühlbaren Schneckenwellen mit einem kühlbaren Gehäuse, dadurch gekennzeichnet, daß die Schneckenprofile (1a, 1b) mindestens auf einem Teil ihrer gesamten Länge vielfach von Nuten (4a, 4b) in regelmäßigen Abständen durchkreuzt werden, so daß von dem ursprünglich durchgehenden Gewindeprofil nur noch kleine Segmentstege stehenbleiben, deren Masse 30 bis 90%, bevorzugt 50 bis 70%, von der Masse des ursprünglichen Gewindeprofils beträgt.

3. Vorrichtung nach Anspruch 2, dadurch gekennzeichnet, daß längs der Schnecken genutete Zonen mit ungenuteten Zonen abwechseln.

4. Vorrichtung nach den Ansprüchen 2 bis 3, dadurch gekennzeichnet, daß die Nuten (4a, 4b) auf der stromabwärts gelegenen Schneckenhälfte angebracht sind.

5. Vorrichtung nach den Ansprüchen 2 bis 4, dadurch gekennzeichnet, daß die Anzahl der Nuten (4a, 4b) pro Welle gleich der Gangzahl des Gewindeprofils ist.

6. Vorrichtung nach den Ansprüchen 2 bis 5, dadurch gekennzeichnet, daß die Nuten (4a, 4b) schraubenförmig mit dem Schneckengewinde entgegengesetzten Drall verlaufen.

7. Vorrichtung nach Anspruch 6, dadurch gekennzeichnet, daß beide Wellen (8, 9) jeweils mit zwei gleichartigen um 180° versetzten Nuten versehen sind und die Nuten (4a, 4b) der ersten Welle (8) zu den Nuten (4a, 4b) der Nachbarwelle (9) derart um 90° phasenverschoben angeordnet ist, daß im Querschnitt gesehen die Nuten (4a, 4b) der ersten Welle (8) im Gewindegrund (7) beginnen, während die Nuten (4a, 4b) der Nachbarwelle (9) am Gewindekamm (10) beginnen.

## Claims

1. Process for the crystallization of melts of chemical products in double-shaft, coolable worm machines which have self-cleaning worm shafts rotating in the same direction, characterised in that the crystallizing material is continually crushed in a repeatedly cutting manner during solidification and during the subsequent cooling operation in the solid phase, while maintaining the main transporting direction in the worm.

2. Apparatus for carrying out the process according to claim 1, consisting of a double-shaft worm machine with self-cleaning, tightly threaded, hollow and coolable worm shafts rotating in the same direction and with a coolable housing, characterised in that the worm profiles (1a, 1b) are repeatedly intersected over at least part of their complete length by grooves (4a, 4b) in regular intervals so that only small segment ridges remain of the originally continuous thread profile, the mass of these segment ridges being 30 to 90%, preferably 50 to 70%, of the mass of the original thread profile.

3. Apparatus according to claim 2, characterised in that grooved zones alternate with ungrooved zones along the worms.

4. Apparatus according to claims 2 to 3, characterised in that the grooves (4a, 4b) are provided on the half of the worms which is positioned downstream.

5. Apparatus according to claims 2 to 4, characterised in that the number of grooves (4a, 4b) per shaft is the same as the thread number of the thread profile.

6. Apparatus according to claims 2 to 5, characterised in that the grooves (4a, 4b) run in a helical manner with an opposite twist to that of the worm thread.

7. Apparatus according to claim 6, characterised in that both shafts (8, 9) are provided respectively with two similar grooves displaced by 180° and the grooves (4a, 4b) of the first shaft (8) is positioned 90° out of phase with the grooves (4a, 4b) of the neighbouring shaft (9) such that, seen in cross section, the grooves (4a, 4b) of the first shaft (8) commence in the tread root (7), whereas the grooves (4a, 4b) of the neighbouring shaft (9) commence at the thread ridge (10).

## Revendications

1. Procédé pour la cristallisation de produits chimiques fondus dans des extrudeuses refoidies à deux vis autonettoyante tournant dans le même sens, caractérisé en ce que le matériau cristallisant est soumis, pendant la solidification puis le refroidissement en phase solide, à un broyage multiple par coupe continue.

2. Dispositif pour la mise en oeuvre du procédé selon revendication 1, constitué par une extrudeuse à deux vix creuses, refroidie, autonettoyage, à engrènement serré et tournant dans le même sens dans une enveloppe refroidie, ledit dispositif étant caractérisé en ce que les profils de vis (1a, 1b) sont interrompus, sur une partie au moins de leur longueur totale, par de multiples encoches (4a, 4b) à intervalles réguliers, de sorte qu'il ne reste du profil de filet continu initial que de faibles ligmants, dont la masse représente 30 à 90%, et de préférence 50 à 70% de la masse du profil de filet initial.

3. Dispositif selon revendication 2, caractérisé en ce que des zones enchochées alternent avec des zones non encochées le long des vis.

4. Dispositif selon revendications 2 et 3, caractérisé en ce que les encoches (4a, 4b) sont usinées sur la moitié aval des vis.

5. Dispositif selon revendications 2 à 4, caractérisé en ce que le nombre d'encoches (4a, 4b) par vis est égal au nombre de filets du filetage.

6. Dispositif selon revendications 2 à 5, caractérisé en ce que les encoches (4a, 4b) sont disposées hélicoïdalement avec un pas opposé à celui du filetage de vis.

7. Dispositif selon revendication 6, caractérisé en ce que les deux vix (8, 9) sont munies chacune de deux encoches semblables, décalées de 180°, et les encoches (4a, 4b) de la première vis (8) sont déphasées de 90° par rapport aux encoches (4a, 4b) de la vis voisine (9) de façon que, sur une vue en coupe, les encoches (4a, 4b) de la première vis (8) commencent au fond (7) de filet, tandis que les encoches (4a, 4b) de la vis voisine (9) commencent sur la crête (10) de filet.

FIG. 1

FIG. 2   A-B

FIG. 3

FIG. 4 C-D

FIG. 5

4a

1b

E

F

1a

4b

T'=T

4a

4b

T

FIG. 6a E-F

H'

7

1b

1a

8

7

FIG. 6b

H'

9

10

10

2

FIG. 7